# EUROPÄISCHE PATENTSCHRIFT

(11) **EP 0 848 200 B1**
(45) Veröffentlichungstag und Bekanntmachung des Hinweises auf die Patenterteilung: **26.02.2003**
(21) Anmeldenummer: 97121277.4
(22) Anmeldetag: 04.12.1997
(51) Int. Cl.: F16L 13/14, F16L 33/22

(54) **Rohrpresskupplung**
Press-fitted pipe joint
Raccord de serrage pour tuyaux

(30) Priorität: 13.12.1996 DE 19651817
(43) Veröffentlichungstag der Anmeldung: 17.06.1998
(73) Patentinhaber: Reckzeh, Manfred, 63457 Hanau (DE); Reckzeh, Thomas, 63457 Hanau (DE)
(72) Erfinder: Knipping, Daniel, 44797 Bochum (DE); Reckzeh, Manfred, 63457 Hanau (DE)
(74) Vertreter: Bonsmann, Manfred, Dipl.-Ing.

(56) Entgegenhaltungen:
- CH-A- 258 085
- DE-B- 1 625 945
- DE-U- 9 109 323
- US-A- 4 343 498
- US-A- 4 412 693
- US-A- 4 564 222
- US-A- 4 932 689

## Beschreibung

Die Erfindung betrifft eine Rohrpreßkupplung, bei der wenigstens ein Rohrende mittels einer außen auf das Rohr axial aufgeschobenen, wenigstens teilweise aus Kunststoff gefertigten Quetsch- bzw. Druckhülse und einer auf diese axial aufgeschobenen Überwurfpreßhülse und einer in das Rohrende eingesetzten, am Außenumfang profilierten Stützhülse, die einen äußeren radialen Anschlagflansch für das Rohrende aufweist, verbunden ist.

Derartige Rohrpreßkupplungen dienen zur schnellen und sicheren Verbindung von Rohrleitungen und zwar entweder zweier Rohrleitungen untereinander (Kupplung im engeren Sinne) oder zur Verbindung einer Rohrleitung mit einem Anschlußstück (einseitiger Rohranschluß). Als Rohrleitungen kommen sowohl Kunststoff- als auch Metall-, z.B. Kupfer- oder Edelstahlrohre und Mehrschicht-Verbundrohre in Betracht.

Eine aus der DE-PS 38 34 296 bekannte Rohrpreßkupplung wird aus Metall (z.B. aus Messing-Stahl) hergestellt. Die Verwendung von Metall hat zwei wesentliche Nachteile: Zum einen ist Metall, insbesondere korrosionsgeschütztes Metall, relativ teuer und aufwendig zu bearbeiten. Zum anderen können insbesondere bei Verwendung von Kunststoffrohren mit der Langzeitstabilität der Preßverbindungen Probleme auftreten. Die Preßverbindung wird nämlich dadurch hergestellt, daß die Quetsch- bzw. Druckhülse durch das Aufschieben der Überwurfpreßhülse derart deformiert wird, daß das Rohrende fest zwischen der Quetsch- bzw. Druckhülse und der Stützhülse gehalten wird, also eine Vorspannung von Quetsch- bzw. Druckhülse und der Stützhülse auf das Rohrende ausgeübt wird. Kunststoffrohre neigen mit der Zeit - insbesondere bei starken Kraft- und Temperaturbelastungen - dazu, durch sog. "Kriechen" dieser Vorspannung nachzugeben. Metallische Hülsen sind nicht immer elastisch genug, um die Vorspannung in diesem Falle aufrecht zu erhalten. Dies kann zu Dichtigkeits- und mechanischen Stabilitätsproblemen der Preßverbindung führen.

Aus der US 45 64 222 A ist eine Rohrpresskupplung bekannt, die die Merkmale des Oberbegriffs des Patentanspruches 1 aufweist, jedoch für die Verbindung relativ weicher Schläuche, insbesondere zur Verbindung von Gummischläuchen ("rubber hoses") - wie z.B. Gartenschläuche - ausgelegt ist. Die Quetsch- und Druckhülse 25 der bekannten Rohrpresskupplung weist zur Sicherstellung der erforderlichen Elastizitätseigenschaften mehrere Schlitze 27 auf. Für den langzeitstabilen Einsatz bei harten Rohren, die aus starren Materialien wie Kunststoffen (nicht Gummi), Mehrschichtverbundwerkstoffen oder Metallen hergestellt sind, ist die bekannte Rohrpresskupplung angesichts der für derartige Rohre aufzubringenden hohen Verpresskräfte nicht stabil genug. Weiterhin kann aufgrund der geschlitzten Quetsch- und Druckhülse bei der Verpressung von Rohren keine zuverlässige Dichtwirkung erreicht werden.

Der Erfindung liegt die Aufgabe zugrunde, eine einfach und kostengünstig herstellbare Rohrpreßkupplung der eingangs genannten Art zu schaffen, bei der die Langzeitstabilität der Preßverbindung verbessert ist.

Diese Aufgabe wird durch eine Rohrpreßkupplung mit dem Merkmalen des Anspruchs 1 gelöst.

Demnach ist erfindungsgemäß vorgesehen, daß der aus Kunststoff bestehende Teil der Quetsch- bzw. Druckhülse ungeschlitzt ausgebildet ist, und daß die Elastizitätseigenschaften des Kunststoffes der Quetsch- bzw. Druckhülse derart gewählt sind, daß die von der Quetsch- bzw. Druckhülse und der Stützhülse auf das Rohr aufgebrachten radialen Vorspannkräfte auch während bei bestimmungsgemäßem Gebrauch durch wechselnde Kraft- und/oder Temperaturbelastungen auftretenden Veränderungen der physikalischen Eigenschaften des Rohres infolge der Elastizitätseigenschaften des verwendeten Kunststoffes bzw. der verwendeten Kunststoffe aufrechterhalten bleiben.

Hierbei ist vorteilhaft, daß sich zum einen Herstellungskosten sparen lassen, da Kunststoffe im allgemeinen preiswerter als entsprechende Metallteile sind und sich z.B. im Spritzgießverfahren einfach und preiswert formen lassen. Zum anderen werden durch die höhere Elastizität von Kunststoffen auftretende Veränderungen der physikalischen Eigenschaften des Rohres kompensiert, so daß die radialen Vorspannkräfte auf Dauer aufrechterhalten bleiben. Die Wahl des erfindungsgemäß geeigneten Kunststoffes hängt von dem zu verbindenden Rohrmaterial ab. Bei Verwendung von Kunststoffrohren sind die Hülsen vorzugsweise wenigstens teilweise aus einem Kunststoff gefertigt, der graduell härter und temperaturbeständiger als der Kunststoff ist, aus dem das Rohr besteht. So ist gewährleistet, daß der Kunststoff, aus dem die Hülsen bestehen, seine physikalischen Eigenschaften infolge von Last- und Temperaturwechseln im wesentlichen beibehält. Durch die größere Elastizität von Kunststoff besteht ein weiterer Vorteil der Erfindung darin, daß die zur Herstellung der Preßverbindung erforderlichen Kräfte kleiner sind als bei einer vergleichbaren Rohrpreßkupplung aus Metall. Zur Verbesserung der Festigkeit und Temperaturbeständigkeit und zur Vermeidung von Kriecheffekten werden vorteilhafterweise modifizierte Kunststoffe z.B. mit Glasfaser-, Kohlefaser oder Mineralfaserzusatz verwendet.

Je nach Einsatzzweck ist auch die Verwendung von Fluorkunststoffen (insbesondere bei hohen Anforderungen an die Temperaturbelastbarkeit) oder thermoplastischen Polyestern möglich.

Insbesondere bei Kunststoffrohren oder kunststoffhaltigen Mehrschicht-Verbundrohren kann die Quetsch- bzw. Druckhülse vorteilhafterweise vollständig aus Kunststoff ausgebildet sein.

Bei Metallrohren reicht die Festigkeit der zur Verfügung stehenden Kunststoffe unter Umständen nicht aus. In diesem Falle kann erfindungsgemäß vorgesehen sein, daß die Quetsch- bzw. Druckhülse aus Kunststoff mit einer innenliegenden Metallhülse ausgebildet ist. Mit einer Metallhülse kann die notwendige Festigkeit erreicht werden, ohne auf die Vorteile der Kunststoffhülse zu verzichten.

Die Metallhülse kann weiterhin durchgängig geschlitzt ausgebildet sein. Dadurch sind die Kräfte, die zur Herstellung der Preßverbindung aufgebracht werden müssen, geringer als bei den bekannten nicht-geschlitzten Quetsch- bzw. Druckhülsen aus Metall. Eine geschlitzte Metallhülse verringert nicht die Dichtigkeit der Preßverbindung, da die Abdichtung im Bereich des Schlitzes der Metallhülse von dem aus Kunststoff bestehenden Teil der Quetsch- bzw. Druckhülse gewährleistet wird.

Falls Gefahr besteht, daß verschiedene Metallarten miteinander in Kontakt kommen können, kann erfindungsgemäß der aus Kunststoff bestehende Teil der Quetsch- bzw. Druckhülse am anschlußseitigen Stirnende einen einstückig mit diesem ausgebildeten Trennring zur Verhinderung einer elektrochemischen Reaktion aufweisen. Ein derartiger Trennring ist beispielsweise erforderlich, wenn die Stützhülse und das Anschlagstück aus Messing, das Rohr jedoch aus Aluminium besteht. Bei dieser Ausführung des Trennrings ist vorteilhaft, daß dieser nicht als separates Teil ausgeführt werden muß, sondern direkt als Bestandteil der Quetsch- bzw. Druckhülse gefertigt werden kann.

Weiterhin kann erfindungsgemäß vorgesehen sein, daß die Quetsch- bzw. Druckhülse in der Nähe des anschlußseitigen Stirnendes mindestens eine entlang des Umfangs angeordnete Ausnehmung bzw. Einkerbung aufweist. Diese Ausnehmung bzw. Einkerbung kann bei der Montage der Rohrpreßkupplung als Sichtfenster zur Überprüfung, ob die Quetsch- bzw. Druckhülse vollständig auf das Rohrende aufgeschoben wurde, dienen.

Die Überwurfpreßhülse kann vorteilhafterweise als Metallhülse mit einer Kunststoffummantelung ausgebildet sein. Die Metallhülse nimmt die nach außen wirkenden Vorspannkräfte auf. Durch die Kunststoffummantelung wird ein wirksamer Korrosionsschutz erzielt. Außerdem kann hierdurch ein für den Ansatz eines Preßwerkzeugs notwendiger Hintergriff aus Kunststoff statt aus Metall hergestellt werden.

Erfindungsgemäß kann weiterhin vorgesehen sein, daß der Innendurchmesser der Überwurfpreßhülse abgestuft ausgebildet ist. Durch die abgestufte Ausbildung der Überwurfpreßhülse wird erreicht, daß die Herstellung der Preßverbindung durch Überschieben der Überwurfpreßhülse über die Quetsch- bzw. Druckhülse erfolgen kann. Die Quetsch- bzw. Druckhülse wird entsprechend dem abgestuften Innenprofil komprimiert.

Insbesondere kann der Innendurchmesser der Überwurfpreßhülse koaxial derart variiert werden, daß ein oder mehrere Bereiche mit unterschiedlichen Schrägen vorgesehen sind. Dadurch kann der Preßvorgang in verschiedene Phasen unterteilt werden, während derer eine unterschiedlich starke Kompression der Quetsch- bzw. Druckhülse erfolgt.

Weiterhin kann vorgesehen sein, den Außendurchmesser und/oder Innendurchmesser der Quetsch- bzw. Druckhülse abgestuft auszubilden. Auch können verschiedene Bereiche mit unterschiedlichen Schrägen vorgesehen sein.

Die Überwurfpreßhülse muß nach Herstellung der Quetschverbindung dauerhaft arretiert werden. Dazu kann erfindungsgemäß eine Selbstarretierung vorgesehen sein, die dadurch verwirklicht wird, daß die Überwurfpreßhülse an ihrem rohrseitigen Stirnende einen Bereich mit vergrößertem Innendurchmesser aufweist und die Quetsch- bzw. Druckhülse sich über das rohrseitige Stirnende der Überwurfpreßhülse erstreckt und der überstehende Teil der Quetsch- bzw. Druckhülse bei hergestellter Preßverbindung leicht konisch nach außen gewölbt ist, wodurch die Überwurfpreßhülse axial fixiert ist. Durch die Vorspannkräfte des Rohres entsteht die leicht konische Außenwölbung des überstehenden Teils der Quetsch- bzw. Druckhülse automatisch bei Herstellung der Preßverbindung.

Zur Arretierung der Überwurfpreßhülse kann aber auch vorgesehen sein, daß das radial äußere Ende des Anschlagflansches in einen axialen Ring übergeht, der vom Anschlagflansch in Richtung des Rohres abragt, so daß eine Nut gebildet wird, in der sich das Rohrende befindet.

Mittels dieser Ringnut kann eine clipsartige Fixierung der Überwurfpreßhülse dadurch erreicht werden, daß die Überwurfpreßhülse eine innere Ringnut aufweist, und daß der axiale Ring eine Umfangsrippe aufweist, die in die Ringnut einrastet.

Zur Arretierung der Überwurfpreßhülse kann diese weiterhin eine innere Ringnut aufweisen und der axiale Ring mit einer eine Ringfeder enthaltenden Ringnut versehen sein, die in die Ringnut einrastet.

Weiterhin kann erfindungsgemäß vorgesehen sein, daß die Stützhülse zur Arretierung des Rohrendes eine Rippenstruktur entlang ihres Außenumfangs aufweist. Durch diese Rippenstruktur wird das Rohr zusätzlich verfomt, wodurch ein ausreichender Halt des Rohrendes und eine Verdrehsicherung gewährleistet wird.

Besonders vorteilhaft kann die Stützhülse ein innenliegendes Metallrohr aufweisen und die Rippenstruktur in Kunststoff ausgebildet sein, der auf das Metallrohr aufgespritzt ist. Durch das innenliegende Metallrohr wird die erforderliche Stabilität gewährleistet. Durch die Kunststoffrippen können aufwendige spanabhebende Bearbeitungsschritte des Metallrohres entfallen.

Weiterhin kann erfindungsgemäß vorgesehen sein, daß der Anschlagflansch ebenfalls in Kunststoff ausgebildet ist und auf das Metallrohr aufgespritzt ist.

Der Anschlagflansch kann vorteilhafterweise einen innenliegenden Metallring zur Verstärkung aufweisen.

Die Erfindung wird nachfolgend unter Bezugnahme auf die in den Zeichnungen dargestellten Ausführungsbeispiele näher erläutert. Es zeigen:
- Fig. 1: eine Längsschnittdarstellung einer erfindungsgemäßen Rohrpreßkupplung in montiertem Zustand,
- Fig. 2: eine Längsschnittdarstellung einer erfindungsgemäßen Quetsch- bzw. Druckhülse,
- Fig. 3: eine Draufsicht auf eine erfindungsgemäßen Quetsch-bzw. Druckhülse,
- Fig. 4: eine Längsschnittdarstellung einer erfindungsgemäßen Überwurfpreßhülse, und
- Fig. 5: eine erfindungsgemäße Stützhülse, teilweise in Schnittdarstellung.

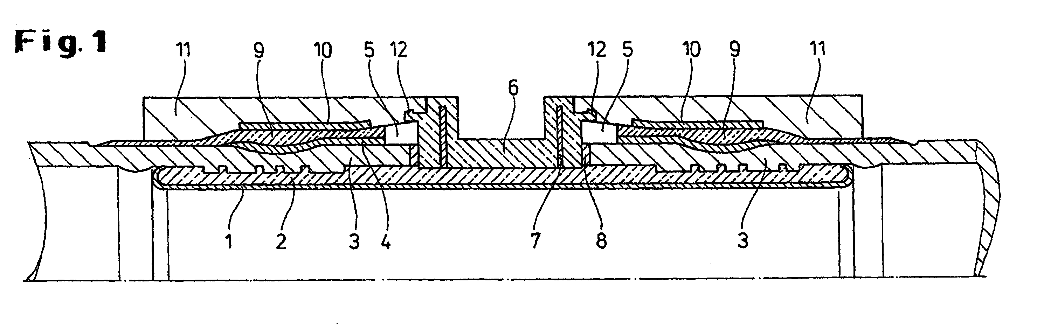

In Fig. 1 ist eine Ausführung der erfindungsgemäßen Rohrpreßkupplung in montiertem Zustand in Längsschnittdarstellung gezeigt. Zwei mit 3 bezeichnete Rohrenden sind zwischen einer Stützhülse, die aus einem innenliegenden Metallrohr 1 und einem Kunststoffteil 2 mit rippenförmiger Struktur besteht, und jeweils einer Quetsch- bzw. Druckhülse bestehend aus einem Kunststoffteil 9 mit einer Metallhülse 4 fixiert. Über die Quetsch- bzw. Druckhülse ist eine Überwurfpreßhülse 11 geschoben.

Die Stützhülse weist aufgespritzte Anschlagflansche 6 auf, die jeweils durch eine metallische Einlage 7 gestützt werden. Die Anschlagflansche 6 dienen gleichzeitig als Hintergriffe zum Ansatz eines zur Herstellung der Quetschverbindung verwendeten Montagewerkzeugs.

Die Quetsch- bzw. Druckhülse weist an ihrem kupplungsseitigen Stirnende Sichtfenster 5 auf, mittels derer eine Kontrolle des Montagevorgangs möglich ist. Weiterhin ist ein Trennring 8 zur Verhinderung einer elektrochemischen Reaktion einstückig mit dem Kunststoffteil 9 der Quetsch- bzw. Druckhülse ausgebildet.

Die Überwurfpreßhülse besteht aus einer Metallhülse 10 mit einer Kunststoffummantelung 11 und wird mittels eines clipsartigen Kupplungsteils 12 arretiert.

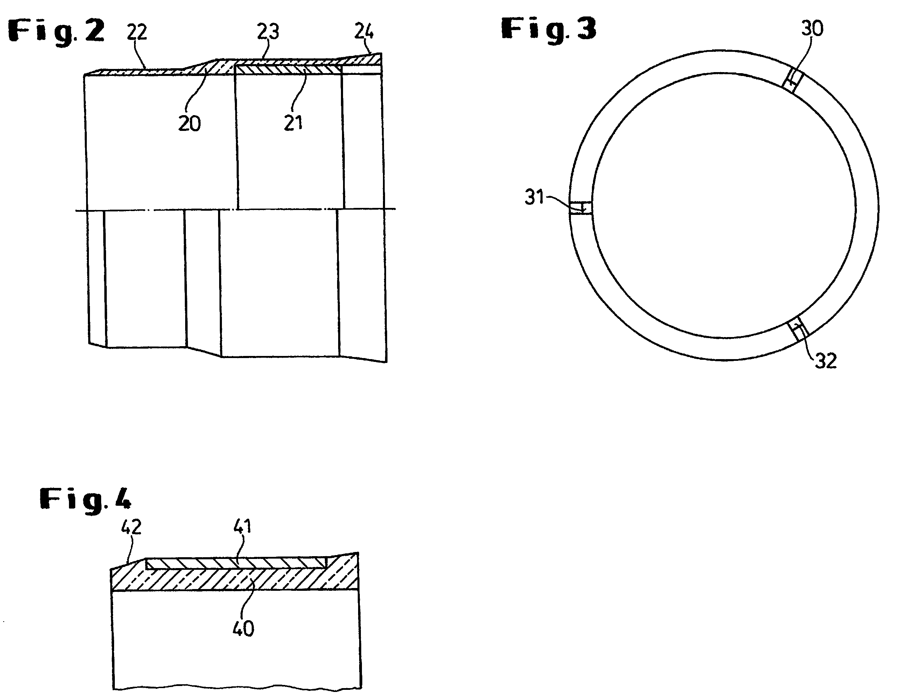

In Fig. 2 ist eine Längsschnittdarstellung einer erfindungsgemäßen Quetsch- bzw. Druckhülse gezeigt. Die Quetsch- bzw. Druckhülse weist einen mit 20 bezeichnetes Teil aus Kunststoff auf. Zur Verstärkung ist eine innenliegende Metallhülse 21 vorgesehen. Somit eignet sich die dargestellte Quetsch- bzw. Druckhülse zur Herstellung von Preßverbindungen auch bei metallischen Rohren. Der Außenumfang weist drei Bereiche 22,23,24 unterschiedlicher Schrägen und Durchmesser auf. Damit wird erreicht, daß der Preßvorgang in verschiedene Phasen unterteilt wird, während derer eine unterschiedlich starke Kompression der Quetsch- bzw. Druckhülse erfolgt.

In Fig. 3 ist die in Fig. 2 dargestellte Quetsch- bzw. Druckhülse in Draufsicht auf das in Gebrauchslage rohrseitige Stirnende gezeigt. Die Quetsch- bzw. Druckhülse weist drei Sichtfenster 30,31,32 zur Kontrolle der korrekten Montage der Rohrpreßkupplung auf: Die Quetsch- bzw. Druckhülse muß vor Herstellung der Preßverbindung vollständig auf das Rohrende aufgeschoben sein, was dadurch kontrolliert werden kann, daß das Rohrende in den Sichtfenstern 30,31,32 sichtbar wird.

In Fig. 4 ist eine erfindungsgemäße Überwurfpreßhülse in Längsschnittdarstellung gezeigt. Diese weist einen aus Kunststoff gefertigten Teil 40, der eine innenliegende Metallhülse 41 umgibt, auf. An der in Gebrauchslage rohrseitigen Stirnseite ist innen eine Abschrägung 42 vorgesehen. Durch diese wird zum einen das Aufstecken der Überwurfpreßhülse auf die Quetsch- bzw. Druckhülse erleichtert, zu anderen wird hierdurch eine Selbstarretierung der Überwurfpreßhülse in der oben beschriebenen Weise ermöglicht.

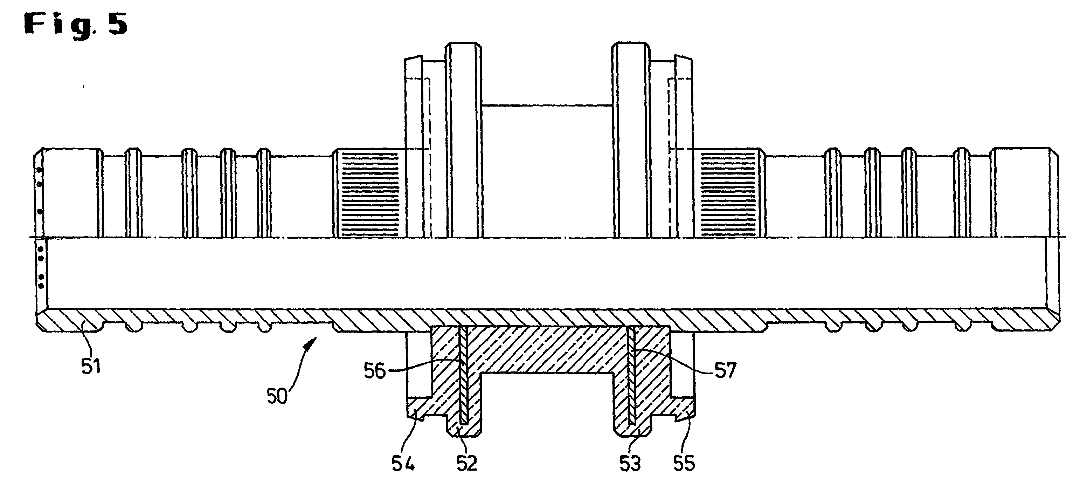

In Fig. 5 ist eine erfindungsgemäße Stützhülse, teilweise in Schnittdarstellung gezeigt. Die Stützhülse besteht aus einem metallischen Innenrohr 51, welches an beiden Enden umgebördelt ist und somit die erste Abdichtung übernimmt. Auf dieses metallische Innenteil (Stützhülse) wird eine Rippenstruktur (Zähne) 50 aus Kunststoff aufgespritzt. Die Stützhülse weist weiterhin zwei Anschlagflächen 52,53 mit Arretierelementen 54,55 für die Überwurfpreßhülsen auf. Die die Anschlagflächen bildenden Kunststoffteile werden jeweils durch einen innenliegenden Metallring 56,57 zusätzlich verstärkt.

## Patentansprüche

1. Rohrpreßkupplung, bei der wenigstens ein Rohrende (3) mittels einer außen auf das Rohr axial aufgeschobenen, wenigstens teilweise aus Kunststoff gefertigten Quetsch- bzw. Druckhülse und einer auf diese axial aufgeschobenen Überwurfpreßhülse (10, 11) und einer in das Rohrende eingesetzten, am Außenumfang profilierten Stützhülse (1, 2), die einen äußeren radialen Anschlagflansch (6) für das Rohrende aufweist, verbunden ist, **dadurch gekennzeichnet, daß** der aus Kunststoff bestehende Teil (9) der Quetsch- bzw. Druckhülse ungeschlitzt ausgebildet ist, und daß die Elastizitätseigenschaften des Kunststoffes (9) der Quetsch- bzw. Druckhülse derart gewählt sind, daß die von der Quetsch- bzw. Druckhülse und der Stützhülse (1, 2) auf das Rohr (3) aufgebrachten radialen Vorspannkräfte auch während bei bestimmungsgemäßem Gebrauch durch wechselnde Kraft- und/oder Temperaturbelastungen auftretenden Veränderungen der physikalischen Eigenschaften des Rohres infolge der Elastizitätseigenschaften des verwendeten Kunststoffes bzw. der verwendeten Kunststoffe aufrechterhalten bleiben.

2. Rohrpreßkupplung nach Anspruch 1, **dadurch gekennzeichnet, daß** die Quetsch- bzw. Druckhülse vollständig aus Kunststoff ausgebildet ist.

3. Rohrpreßkupplung nach Anspruch 1, **dadurch gekennzeichnet, daß** die Quetsch- bzw. Druckhülse aus Kunststoff (9) mit einer innenliegenden metallischen Hülse (4) ausgebildet ist.

4. Rohrpreßkupplung nach Anspruch 3, **dadurch gekennzeichnet, daß** die innenliegende Metallhülse (4) durchgängig geschlitzt ausgebildet ist.

5. Rohrpreßkupplung nach einem der Ansprüche 1 bis 4, **dadurch gekennzeichnet, daß** der aus Kunststoff bestehende Teil (9) der Quetsch- bzw. Druckhülse am anschlußseitigen Stirnende einen einstückig mit diesem ausgebildeten Trennring (8) zur Verhinderung einer elektrochemischen Reaktion aufweist.

6. Rohrpreßkupplung nach einem der Ansprüche 1 bis 5, **dadurch gekennzeichnet, daß** die Quetsch- bzw. Druckhülse in der Nähe des anschlußseitigen Stirnendes mindestens eine entlang des Umfangs angeordnete Ausnehmung bzw. Einkerbung (5) aufweist.

7. Rohrpreßkupplung nach einem der Ansprüche 1 bis 6, **dadurch gekennzeichnet, daß** die Überwurfpreßhülse als Metallhülse (10) mit einer Kunststoffummantelung (11) ausgebildet ist.

8. Rohrpreßkupplung nach einem der Ansprüche 1 bis 7, **dadurch gekennzeichnet, daß** der Innendurchmesser der Überwurfpreßhülse (10, 11) abgestuft ausgebildet ist.

9. Rohrpreßkupplung nach Anspruch 8, **dadurch gekennzeichnet, daß** der Innendurchmesser der Überwurfpreßhülse (10, 11) koaxial derart variiert, daß ein oder mehrere Bereiche mit unterschiedlichen Schrägen und Durchmessern vorgesehen sind.

10. Rohrpreßkupplung nach einem der Ansprüche 1 bis 9, **dadurch gekennzeichnet, daß** der Außendurchmesser der Quetsch- bzw. Druckhülse abgestuft ausgebildet ist.

11. Rohrpreßkupplung nach Anspruch 10, **dadurch gekennzeichnet, daß** der Außendurchmesser der Quetsch- bzw. Druckhülse koaxial derart variiert, daß ein oder mehrere Bereiche (22, 23, 24) mit unterschiedlichen Schrägen vorgesehen sind.

12. Rohrpreßkupplung nach einem der Ansprüche 1 bis 11, **dadurch gekennzeichnet, daß** die Überwurfpreßhülse an ihrem rohrseitigen Stirnende einen Bereich (42) mit vergrößertem Innendurchmesser aufweist, und die Quetsch- bzw. Druckhülse sich über das rohrseitige Stirnende der Überwurfpreßhülse erstreckt und der überstehende Teil der Quetsch- bzw. Druckhülse bei hergestellter Preßverbindung leicht konisch nach außen gewölbt ist, wodurch die Überwurfpreßhülse axial fixiert ist.

13. Rohrpreßkupplung nach einem der Ansprüche 1 bis 12, **dadurch gekennzeichnet, daß** das radial äußere Ende des Anschlagflansches (6) in einen axialen Ring (12) übergeht, der vom Anschlagflansch (6) in Richtung des Rohres (3) abragt, so daß eine Nut gebildet wird, in der sich das Rohrende (3) befindet.

14. Rohrpreßkupplung nach Anspruch 13, **dadurch gekennzeichnet, daß** die Überwurfpreßhülse (10, 11) eine innere Ringnut aufweist, und daß der axiale Ring (12) eine Umfangsrippe aufweist, die in die Ringnut einrastet.

15. Rohrpreßkupplung nach Anspruch 13, **dadurch gekennzeichnet, daß** die Überwurfpreßhülse eine innere Ringnut aufweist und der axiale Ring mit einer eine Ringfeder enthaltenden Ringnut versehen ist, die in die Ringnut einrastet.

16. Rohrpreßkupplung nach einem der Ansprüche 1 bis 15, **dadurch gekennzeichnet, daß** die Stützhülse (1, 2) zur Arretierung des Rohrendes (3) eine Rippenstruktur entlang ihres Außenumfangs aufweist.

17. Rohrpreßkupplung nach Anspruch 16, **dadurch gekennzeichnet, daß** die Stützhülse ein innenliegendes Metallrohr (1) aufweist, und daß die Rippenstruktur in Kunststoff (2) ausgebildet ist, der auf das Metallrohr (1) aufgespritzt ist.

18. Rohrpreßkupplung nach Anspruch 17, **dadurch gekennzeichnet, daß** der Anschlagflansch (6) in Kunststoff ausgebildet ist und auf das Metallrohr (1) aufgespritzt ist.

19. Rohrpreßkupplung nach Anspruch 18, **dadurch gekennzeichnet, daß** der Anschlagflansch (6) einen innenliegenden Metallring (7) aufweist.

## Claims

1. A compression pipe joint in which at least one pipe end (3) is connected by means of a squeeze or pressure sleeve which is at least partially made from plastic material and which is axially pushed on the outside on to the pipe and a clamping pressing sleeve (10, 11) which is axially pushed on to the squeeze or pressure sleeve and a support sleeve (1, 2) which is inserted into the pipe end and which is profiled at the outer periphery and which has an outer radial abutment flange (6) for the pipe end, **characterised in that** the part (9) of the squeeze or pressure sleeve which comprises plastic material is of a non-slotted nature and that the elasticity properties of the plastic material (9) of the squeeze or pressure sleeve are so selected that the radial biasing forces applied by the squeeze or pressure sleeve and the support sleeve (1, 2) to the pipe (3) are maintained even during variations in the physical properties of the pipe, which occur in ordinary use due to changing force and/or temperature loadings, as a result of the elasticity properties of the plastic material or materials used.

2. A compression pipe joint according to claim 1 **characterised in that** the squeeze or pressure sleeve is made entirely from plastic material.

3. A compression pipe joint according to claim 1 **characterised in that** the squeeze or pressure sleeve is made from plastic material (9) with an inwardly disposed metal sleeve (4).

4. A compression pipe joint according to claim 3 **characterised in that** the inwardly disposed metal sleeve (4) is of a slotted nature throughout.

5. A compression pipe joint according to one of claims 1 to 4 **characterised in that** the part (9) of the squeeze or pressure sleeve which comprises plastic material, at the end towards the connection, has a separating ring (8) formed in one piece therewith, for preventing an electrochemical reaction.

6. A compression pipe joint according to one of claims 1 to 5 **characterised in that** in the proximity of the end towards the connection the squeeze or pressure sleeve has at least one notch or recess (5) arranged along the periphery.

7. A compression pipe joint according to one of claims 1 to 6 **characterised in that** the clamping pressing sleeve is in the form of a metal sleeve (10) with a plastic sheathing (11).

8. A compression pipe joint according to one of claims 1 to 7 **characterised in that** the inside diameter of the clamping pressing sleeve (10, 11) is of a stepped configuration.

9. A compression pipe joint according to claim 8 **characterised in that** the inside diameter of the clamping pressing sleeve (10, 11) varies coaxially in such a way that there are one or more regions with different slopes and diameters.

10. A compression pipe joint according to one of claims 1 to 9 **characterised in that** the outside diameter of the squeeze or pressure sleeve is of a stepped configuration.

11. A compression pipe joint according to claim 10 **characterised in that** the outside diameter of the squeeze or pressure sleeve varies coaxially in such a way that there are one or more regions (22, 23, 24) with different slopes.

12. A compression pipe joint according to one of claims 1 to 11 **characterised in that** the clamping pressing sleeve at its end towards the pipe has a region (42) of enlarged inside diameter and the squeeze or pressure sleeve extends beyond the end towards the pipe of the clamping pressing sleeve and the projecting part of the squeeze or pressure sleeve when the compression joint is made is slightly conically outwardly curved whereby the clamping pressing sleeve is axially fixed.

13. A compression pipe joint according to one of claims 1 to 12 **characterised in that** the radially outer end of the abutment flange (6) goes into an axial ring (12) which projects from the abutment flange (6) in the direction of the pipe (3) so that a groove is formed, in which the pipe end (3) is disposed.

14. A compression pipe joint according to claim 13 **characterised in that** the clamping pressing sleeve (10, 11) has an inner annular groove and that the axial ring (12) has a peripheral rib which engages into the annular groove.

15. A compression pipe joint according to claim 13 **characterised in that** the clamping pressing sleeve has an inner annular groove and the axial ring is provided with an annular groove which contains an annular spring which engages into the annular groove.

16. A compression pipe joint according to one of claims 1 to 15 **characterised in that** the support sleeve (1, 2) has a rib structure along its outside periphery for arresting the pipe end (3).

17. A compression pipe joint according to claim 16 **characterised in that** the support sleeve has an inwardly disposed metal pipe (1) and that the rib structure is formed in plastic material (2) which is injection moulded on to the metal pipe (1).

18. A compression pipe joint according to claim 17 **characterised in that** the abutment flange (6) is made of plastic material and is injection moulded on to the metal pipe (1).

19. A compression pipe joint according to claim 18 **characterised in that** the abutment flange (6) has an inwardly disposed metal ring (7).

## Revendications

1. Raccord de serrage pour tuyaux dans lequel au moins une extrémité tubulaire (3) est reliée au moyen d'une douille respective d'écrasement ou de pression, enfilée axialement sur le tuyau et consistant au moins partiellement en une matière plastique, d'une gaine de compression (10, 11) enfilée axialement sur ladite douille, et d'une douille d'appui (1, 2) insérée dans l'extrémité tubulaire, profilée sur le pourtour extérieur et munie d'une collerette radiale extérieure de butée (6) destinée à l'extrémité tubulaire, **caractérisé par le fait que** la partie (9) de la douille respective d'écrasement ou de pression, consistant en une matière plastique, est de réalisation non fendue ; et **par le fait que** les propriétés d'élasticité de la matière plastique (9) de la douille respective d'écrasement ou de pression sont choisies de façon telle que les forces radiales de précontrainte, appliquées au tuyau (3) par la douille respective d'écrasement ou de pression et par la douille d'appui (1, 2), demeurent également maintenues au cours de modifications des propriétés physiques du tuyau survenant, lors d'une utilisation conforme, suite à des contraintes mécaniques et/ou thermiques changeantes, du fait des propriétés d'élasticité de la ou des matière(s) plastique(s) respectivement utilisée(s).

2. Raccord de serrage pour tuyaux, selon la revendication 1, **caractérisé par le fait que** la douille respective d'écrasement ou de pression est intégralement réalisée en matière plastique.

3. Raccord de serrage pour tuyaux, selon la revendication 1, **caractérisé par le fait que** la douille respective d'écrasement ou de pression est réalisée en matière plastique (9), avec une douille métallique (4) occupant une position intérieure.

4. Raccord de serrage pour tuyaux, selon la revendication 3, **caractérisé par le fait que** la douille métallique intérieure (4) est d'une réalisation présentant des fentes traversantes.

5. Raccord de serrage pour tuyaux, selon l'une des revendications 1 à 4, **caractérisé par le fait que** la partie (9) de la douille respective d'écrasement ou de pression qui consiste en une matière plastique comporte, à l'extrémité frontale située côté raccordement, une bague séparatrice (8) réalisée d'une seule pièce avec ladite extrémité, en vue d'empêcher une réaction électrochimique.

6. Raccord de serrage pour tuyaux, selon l'une des revendications 1 à 5, **caractérisé par le fait que** la douille respective d'écrasement ou de pression comporte, à proximité de l'extrémité frontale située côté raccordement, au moins un évidement ou une encoche (5) respectivement disposé(e) le long du pourtour.

7. Raccord de serrage pour tuyaux, selon l'une des revendications 1 à 6, **caractérisé par le fait que** la gaine de compression est réalisée sous la forme d'une douille métallique (10) pourvue d'un enrobage en matière plastique (11).

8. Raccord de serrage pour tuyaux, selon l'une des revendications 1 à 7, **caractérisé par le fait que** le diamètre intérieur de la gaine de compression (10, 11) est de réalisation étagée.

9. Raccord de serrage pour tuyaux, selon la revendication 8, **caractérisé par le fait que** le diamètre intérieur de la gaine de compression (10, 11) varie coaxialement de façon telle qu'il soit prévu une ou plusieurs région(s) à biseaux et diamètres différents.

10. Raccord de serrage pour tuyaux, selon l'une des revendications 1 à 9, **caractérisé par le fait que** le diamètre extérieur de la douille respective d'écrasement ou de pression est de réalisation étagée.

11. Raccord de serrage pour tuyaux, selon la revendication 10, **caractérisé par le fait que** le diamètre extérieur de la douille respective d'écrasement ou de pression varie coaxialement de façon telle qu'il soit prévu une ou plusieurs région(s) (22, 23, 24) à biseaux différents.

12. Raccord de serrage pour tuyaux, selon l'une des revendications 1 à 11, **caractérisé par le fait que** la gaine de compression possède, à son extrémité frontale située côté tuyau, une région (42) de diamètre intérieur agrandi, la douille respective d'écrasement ou de pression s'étend sur ladite extrémité frontale de la gaine de compression qui est située côté tuyau, et la partie saillante de ladite douille respective d'écrasement ou de pression présente un léger bombement conique vers l'extérieur, lorsque la liaison par compression est établie, de sorte que ladite gaine de compression est verrouillée axialement à demeure.

13. Raccord de serrage pour tuyaux, selon l'une des revendications 1 à 12, **caractérisé par le fait que** l'extrémité radialement extérieure de la collerette de butée (6) fusionne dans une bague axiale (12) dépassant au-delà de ladite collerette de butée (6), en direction du tuyau (3), de manière à former une rainure dans laquelle se trouve l'extrémité tubulaire (3).

14. Raccord de serrage pour tuyaux, selon la revendication 13, **caractérisé par le fait que** la gaine de compression (10, 11) possède une saignée annulaire intérieure ; et **par le fait que** la bague axiale (12) comporte une nervure périphérique s'encliquetant dans ladite saignée annulaire.

15. Raccord de serrage pour tuyaux, selon la revendication 13, **caractérisé par le fait que** la gaine de compression possède une saignée annulaire intérieure, et la bague axiale est munie d'une saignée annulaire renfermant une languette annulaire qui s'encliquette dans la saignée annulaire.

16. Raccord de serrage pour tuyaux, selon l'une des revendications 1 à 15, **caractérisé par le fait que** la douille d'appui (1, 2) présente une structure nervurée, le long de son pourtour extérieur, en vue d'arrêter l'extrémité tubulaire (3).

17. Raccord de serrage pour tuyaux, selon la revendication 16, **caractérisé par le fait que** la douille d'appui possède un tube métallique intérieur (1) ; et **par le fait que** la structure nervurée est réalisée en une matière plastique (2) injectée sur ledit tube métallique (1).

18. Raccord de serrage pour tuyaux, selon la revendication 17, **caractérisé par le fait que** la collerette de butée (6) est réalisée en une matière plastique et est injectée sur le tube métallique (1).

19. Raccord de serrage pour tuyaux, selon la revendication 18, **caractérisé par le fait que** la collerette de butée (6) comporte une bague métallique (7) occupant une position intérieure.
